# EUROPÄISCHE PATENTANMELDUNG

(11) **EP 4 164 048 A1**
(43) Veröffentlichungstag der Anmeldung: **12.04.2023**
(21) Anmeldenummer: 21200967.4
(22) Anmeldetag: 05.10.2021
(51) Int. Cl.: H01M 50/531, H01M 50/533, H01M 50/538, H01M 50/54

(54) **ENERGIESPEICHERELEMENT UND HERSTELLUNGSVERFAHREN**

(71) Anmelder: VARTA Microbattery GmbH, 73479 Ellwangen Jagst (DE)
(72) Erfinder: Elmer, Martin, 73479 Ellwangen (DE); Soldner, Andreas, 91550 Dinkelsbühl (DE); Stern, Rainer, 73479 Ellwangen (DE)
(74) Vertreter: Ostertag & Partner Patentanwälte mbB

(57) **Zusammenfassung**

Bekannt sind Energiespeicherelemente (100) mit einer Kathode (101) und eine Anode (102), die Teile eines Verbundkörpers (109) sind, in dem sie, getrennt durch eine Separator- oder Festelektrolytschicht (110), in der Sequenz Kathode (101) / Separator- oder Festelektrolytschicht (110) / Anode (102) vorliegen, wobei Kathode (101) und Anode (102) Stromkollektoren (101a und 102a) umfassen, die neben mit Elektrodenmaterial (117 und 118) beidseitig beschichteten Bereichen (101b und 102b) jeweils einen Randstreifen (101c und 102c) aufweisen, der nicht mit Elektrodenmaterial beschichtet ist. Der freie Randstreifen (101c) des Kathodenstromkollektors (101a) tritt hierbei aus einer Seite des Verbundkörpers (109) und derfreie Randstreifen (102c) des Anodenstromkollektors (102a) aus einer anderen Seite des Verbundkörpers (109) aus, wobei einer der Randstreifen (101c, 102c) mit einem ersten Kontaktblech (119) und der andere mit einem zweiten Kontaktblech (120) in unmittelbarem Kontakt steht.

Es wird vorgeschlagen, mindestens einen der mit einem der Kontaktbleche (119, 120) in unmittelbarem Kontakt stehenden Randstreifen (101c, 102c) mittels eines Umformvorgangs zu behandeln, so dass er einen U-förmigen oder V-förmigen Querschnitt und somit auf einer Seite eine langgestreckte Vertiefung oder Einbuchtung (121,124) und auf der anderen Seite eine zu der Vertiefung korrespondierende langgestreckte Erhebung (122, 123) aufweist.

## Beschreibung

Die Erfindung betrifft ein Energiespeicherelement, das sich zur Bereitstellung sehr hoher Ströme eignet, sowie ein Verfahren zur Herstellung eines solchen Energiespeicherelements.

### ANWENDUNGSGEBIET UND STAND DER TECHNIK

Elektrochemische Energiespeicherelemente sind dazu in der Lage, gespeicherte chemische Energie durch eine Redoxreaktion in elektrische Energie umzuwandeln. Die einfachste Form eines elektrochemischen Energiespeicherelements ist die elektrochemische Zelle. Sie umfasst eine positive und eine negative Elektrode, die von einem Separator voneinander getrennt sind. Bei einer Entladung werden an der negativen Elektrode durch einen Oxidationsprozess Elektronen freigesetzt. Hieraus resultiert ein Elektronenstrom, der von einem externen elektrischen Verbraucher abgegriffen werden kann, für den die elektrochemische Zelle als Energielieferant dient. Zugleich kommt es zu einem der Elektrodenreaktion entsprechenden lonenstrom innerhalb der Zelle. Dieser lonenstrom durchquert den Separator und wird durch einen ionenleitenden Elektrolyten ermöglicht.

Wenn die Entladung reversibel ist, also die Möglichkeit besteht, die bei der Entladung erfolgte Umwandlung von chemischer Energie in elektrische Energie wieder umzukehren und die Zelle wieder zu laden, spricht man von einer sekundären Zelle. Die bei sekundären Zellen allgemein übliche Bezeichnung der negativen Elektrode als Anode und die Bezeichnung der positiven Elektrode als Kathode bezieht sich auf die Entladefunktion der elektrochemischen Zelle.

Für viele Anwendungen werden als Energiespeicherelemente heute sekundäre Lithium-Ionen-Zellen eingesetzt, da diese hohe Ströme bereitstellen können und sich durch eine vergleichsweise hohe Energiedichte auszeichnen. Sie basieren auf dem Einsatz von Lithium, welches in Form von Ionen zwischen den Elektroden der Zelle hin und her wandern kann. Die negative Elektrode und die positive Elektrode einer Lithium-Ionen-Zelle werden in der Regel von sogenannten Kompositelektroden gebildet, die neben elektrochemisch aktiven Komponenten auch elektrochemisch inaktive Komponenten umfassen.

Als elektrochemisch aktive Komponenten (Aktivmaterialien) für sekundäre Lithium-Ionen-Zellen kommen prinzipiell sämtliche Materialien in Frage, die Lithium-lonen aufnehmen und wieder abgeben können. Für die negative Elektrode werden hierfür beispielsweise Partikel auf Kohlenstoffbasis, wie beispielsweise graphitischer Kohlenstoff, eingesetzt. Als Aktivmaterialien für die positive Elektrode können beispielsweise Lithiumcobaltoxid (LiCoO₂), Lithiummanganoxid (LiMn₂O₄), Lithiumeisenphosphat (LiFePO₄) oder Derivate hiervon eingesetzt werden. Die elektrochemisch aktiven Materialien sind in der Regel in Partikelform in den Elektroden enthalten.

Als elektrochemisch inaktive Komponenten umfassen die Kompositelektroden im Allgemeinen einen flächigen und/oder bandförmigen Stromkollektor, beispielsweise eine metallische Folie, der als Träger für das jeweilige Aktivmaterial dient. Der Stromkollektor für die negative Elektrode (Anodenstromkollektor) kann beispielsweise aus Kupfer oder Nickel und der Stromkollektor für die positive Elektrode (Kathodenstromkollektor) beispielsweise aus Aluminium gebildet sein. Weiterhin können die Elektroden als elektrochemisch inaktive Komponenten einen Elektrodenbinder (z. B. Polyvinylidenfluorid (PVDF) oder ein anderes Polymer, beispielsweise Carboxymethylzellulose), leitfähigkeitsverbessernde Additive und andere Zusätze umfassen. Der Elektrodenbinder gewährleistet die mechanische Stabilität der Elektroden und häufig auch die Haftung des Aktivmaterials auf den Stromkollektoren.

Als Elektrolyten umfassen Lithium-Ionen-Zellen in der Regel Lösungen von Lithiumsalzen wie Lithiumhexafluorophosphat (LiPF₆) in organischen Lösungsmitteln (z. B. Ether und Ester der Kohlensäure).

Die Kompositelektroden werden bei der Herstellung einer Lithium-Ionen-Zelle mit einem oder mehreren Separatoren zu einem Verbundkörper kombiniert. Hierbei werden die Elektroden und Separatoren meist unter Druck, gegebenenfalls auch durch Lamination oder durch Verklebung, miteinander verbunden. Die grundsätzliche Funktionsfähigkeit der Zelle kann dann durch Tränkung des Verbunds mit dem Elektrolyten hergestellt werden.

In vielen Ausführungsformen wird der Verbundkörper in Form eines Wickels gebildet oder zu einem Wickel verarbeitet. Alternativ kann es sich bei dem Verbundkörper auch um einen Stapel aus Elektroden handeln.

Für Anwendungen im Automobilbereich, für E-Bikes oder auch für andere Anwendungen mit hohem Energiebedarf wie z.B. in Werkzeugen werden Lithium-Ionen-Zellen mit möglichst hoher Energiedichte benötigt, die gleichzeitig in der Lage sind, mit hohen Strömen beim Laden und Entladen belastet zu werden.

In der WO 2017/215900 A1 sind zylindrische Rundzellen beschrieben, bei denen ein Verbundkörper aus bandförmigen Elektroden gebildet ist und in Form eines Wickels vorliegt. Die Elektroden weisen jeweils mit Elektrodenmaterial beladene Stromkollektoren auf. Entgegengesetzt gepolte Elektroden sind innerhalb des Verbundkörpers versetzt zueinander angeordnet, so dass Längsränder der Stromkollektoren der positiven Elektroden an einer Seite und Längsränder der Stromkollektoren der negativen Elektroden an einer weiteren Seite aus dem Wickel austreten. Zur elektrischen Kontaktierung der Stromkollektoren weist die Zelle Kontaktplatten auf, die auf den Stirnseiten des Wickels aufsitzen und mit den Längsrändern der Stromkollektoren durch Verschweißung verbunden sind. Dadurch ist es möglich, die Stromkollektoren und damit auch die dazugehörigen Elektroden über ihre gesamte Länge elektrisch zu kontaktieren. Dies senkt den Innenwiderstand innerhalb der beschriebenen Zelle sehr deutlich. Das Auftreten großer Ströme kann in der Folge sehr viel besser abgefangen und auch Wärme kann besser aus dem Wickel abgeführt werden.

Potentiell problematisch ist hierbei, dass die Ränder der Stromkollektoren beim Aufbringen der Kontaktplatten oft unkontrolliert gestaucht werden, woraus undefinierte Faltungen resultieren können. Ein großflächiger, formschlüssiger Kontakt zwischen den Stirnseiten und den Kontaktplatten wird dadurch erschwert. Zudem erhöht sich die Gefahr von stirnseitigen Fein- oder Kurzschlüssen, etwa in Folge einer Beschädigung des zwischen den Elektroden angeordneten Separators.

Zur Lösung dieses Problems wird in der WO 2020/096973 A1 vorgeschlagen, die Ränder der Stromkollektoren vorzubehandeln, insbesondere Teile der Stromkollektorränder zu entfernen, so dass sie rechteckförmig ausgebildet sind.

Eine gezielte Vorverformung der Ränder von Stromkollektoren ist aus der US 2018/0190962 A1 und aus der JP 2015-149499 A bekannt.

Die bekannten Lösungen haben den Nachteil, dass die Vorbehandlung der Stromkollektorränder sehr aufwendig ist.

### AUFGABE UND LÖSUNG

Demgegenüber lag der vorliegenden Erfindung die Aufgabe zugrunde, Energiespeicherelemente bereitzustellen, die sich durch einen Verbundkörper aus Elektroden und gegebenenfalls einem oder mehreren Separatoren auszeichnen, der leichter mittels besagter Kontaktplatten kontaktierbar ist.

Diese Aufgabe wird durch das Energiespeicherelement mit den Merkmalen des unabhängigen Anspruchs 1 gelöst. Auch das Verfahren mit den Merkmalen des Anspruchs 10 trägt zur Lösung der Aufgabe bei. Bevorzugte Ausführungsformen der Erfindung sind in den abhängigen Ansprüchen definiert.

### Erfindungsgemäßes Energiespeicherelement

Das erfindungsgemäße Energiespeicherelement weist stets die unmittelbar folgenden Merkmale a. bis h. auf:
a. Es umfasst eine Kathode und eine Anode, die Teil eines Verbundkörpers sind, in dem sie, getrennt durch eine Separator- oder Festelektrolytschicht, in der Sequenz Kathode / Separator- oder Festelektrolytschicht / Anode vorliegen,
b. die Kathode umfasst einen Kathodenstromkollektor und ein positives Elektrodenmaterial,
c. der Kathodenstromkollektor weist
   - einen Hauptbereich, der beidseitig mit einer Schicht aus dem positiven Elektrodenmaterial beladen ist, sowie
   - einen freien Randstreifen, der sich entlang eines Rands des Kathodenstromkollektors erstreckt und der nicht mit dem positiven Elektrodenmaterial beladen ist, auf,
d. die Anode umfasst einen Anodenstromkollektor und ein negatives Elektrodenmaterial,
e. der Anodenstromkollektor weist
   - einen Hauptbereich, der beidseitig mit einer Schicht aus dem negativen Elektrodenmaterial beladen ist, sowie
   - einen freien Randstreifen, der sich entlang eines Rands des Anodenstromkollektors erstreckt und der nicht mit dem negativen Elektrodenmaterial beladen ist, auf,
f. die Kathode und die Anode sind derart ausgebildet und/oder innerhalb des Elektroden-Separator-Verbunds derart zueinander angeordnet, dass der freie Randstreifen des Kathodenstromkollektors aus einer Seite des Verbundkörpers und der freie Randstreifen des Anodenstromkollektors aus einer anderen Seite des Verbundkörpers austritt,
g. das Energiespeicherelement umfasst ein erstes Kontaktblech, das mit einem der freien Randstreifen in unmittelbarem Kontakt steht, und ein zweites Kontaktblech, das mit dem anderen der freien Randstreifen in unmittelbarem Kontakt steht, und
h. mindestens einer der mit einem der Kontaktbleche in unmittelbarem Kontakt stehende Randstreifen weist in Folge eines Umformvorgangs, beispielsweise einer Faltung oder Prägung, einen U-förmigen oder V-förmigen Querschnitt und somit auf einer Seite eine langgestreckte Vertiefung oder Einbuchtung und auf der anderen Seite eine zu der Vertiefung korrespondierende langgestreckte Erhebung auf.

Das erfindungsgemäße Energiespeicherelement zeichnet sich also besonders dadurch aus, dass es Stromkollektoren aufweist, deren freie Randstreifen einem Umformvorgang unterworfen wurden. Dies ermöglicht eine bessere Anbindung der Stromkollektoren an die Kontaktbleche, was wiederum die thermische Anbindung der Elektroden ans Gehäuse sowie den Innenwiderstand der Zelle absenken kann. Darüber hinaus ist auch das Risiko eines internen Kurzschlusses vermindert, da der U- oder V-förmige Querschnitt eine sehr definierte Faltung des Randstreifens beim Aufpressen einer Kontaktplatte ermöglicht. Die eingangs erwähnten unkontrollierten Stauchungen können so nicht auftreten.

Besonders bevorzugt weisen sowohl der Randstreifen des Anodenstromkollektors als auch der Randstreifen des Kathodenstromkollektors den U-förmigen oder V-förmigen Querschnitt auf.

Natürlich sind die die Begriffe "U-förmig" und "V-förmig" im Rahmen der vorliegenden Erfindung nicht dahingehend auszulegen, dass der Querschnitt die Form eines perfekten U oder V aufweist. Beispielsweise beim Aufsetzen der Kontaktplatten kann es zu einer weiteren Deformation des oder der Randstreifen kommen, so dass beispielsweise ein V-förmiger Querschnitt sehr spitz ausfällt, die Schenkel des V also einen sehr kleinen Winkel einschließen, oder das U im Bereich seiner Öffnung deformiert wird.

Weiterhin: Der oder die Randstreifen weisen in Folge des Umformvorgangs nicht zwingend in ihrer Gänze den U-förmigen oder V-förmigen Querschnitt auf. Es ist vielmehr bevorzugt, dass lediglich ein Teilbereich des oder der Randstreifen dem Umformvorgang unterworfen wird. In dieser bevorzugten Ausführungsform umfassen der oder die Randstreifen somit mindestens einen nicht durch den Umformvorgang deformierten Bereich. Dieser erstreckt sich bevorzugt entlang der langgestreckten Vertiefung oder Einbuchtung bzw. entlang der zu der Vertiefung oder Einbuchtung korrespondierenden langgestreckten Erhebung.

### Zylindrische Ausführungsform

Das erfindungsgemäße Energiespeicherelement kann als zylindrische Rundzelle oder auch prismatisch ausgebildet sein. In der zylindrischen Ausführungsform weist es die unmittelbar folgenden Merkmale a. bis e. auf:
a. Die Elektroden und die Stromkollektoren sowie die Schichten aus den Elektrodenmaterialien sind bandförmig ausgebildet,
b. Es umfasst mindestens einen bandförmigen Separator oder mindestens eine bandförmige Festelektrolytschicht,
c. der Verbundkörper liegt in Form eines zylindrischen Wickels vor, in dem die Elektroden und der mindestens eine Separator spiralförmig um eine Wickelachse herum aufgewickelt vorliegen, wobei der Verbundkörper eine erste und eine zweite endständige Stirnseite und einen Wickelmantel umfasst und der freie Randstreifen des Kathodenstromkollektors aus der ersten Stirnseite und der freie Randstreifen des Anodenstromkollektors aus der zweiten Stirnseite austritt,
d. Es umfasst ein zylindrisches Gehäuse, insbesondere ein zylindrisches Metallgehäuse, umfassend einen umlaufenden Gehäusemantel und an den Stirnseiten einen kreisförmigen Boden und einen Deckel, und
e. In dem Gehäuse ist der als Wickel ausgebildete Verbundkörper axial ausgerichtet, so dass der Wickelmantel an der Innenseite des umlaufenden Gehäusemantels anliegt.

Der Verbundkörper umfasst in dieser Ausführungsform bevorzugt einen bandförmigen Separator oder zwei bandförmige Separatoren, der oder die jeweils einen ersten und einen zweiten Längsrand sowie zwei Endstücke aufweisen.

Die Kontaktbleche sitzen in dieser Ausführungsform bevorzugt flach auf den beiden Stirnseiten auf.

Mit der zylindrischen Ausführungsform des erfindungsgemäßen Energiespeicherelements gehen einige besondere Vorteile einher. Aus dem Stand der Technik ist es bekannt, dass bei der Herstellung zylindrischer Wickel aus Elektroden durch ungenaues Wickeln der Elektrodenränder ein sogenannter "Teleskopiereffekt" auftreten kann, der in unebenen Stirnseiten des Wickels resultieren kann. In der Folge ergeben sich maßliche, mechanische und schweißtechnische Probleme. Mit gemäß der Erfindung umgeformten Randstreifen kann dieser Effekt vermieden werden. Der Randstreifen mit dem U-förmigen oder dem V-förmigen Querschnitt kann bei Wickeln eine Führung bieten, so dass Ungenauigkeiten bei der Wickelherstellung entgegengewirkt wird.

Besonders bevorzugt zeichnet sich das erfindungsgemäße Energiespeicherelement in dieser Ausführungsform durch das unmittelbarfolgende Merkmal a. aus:
a. Das Metallgehäuse umfasst ein becherförmiges, zylindrisch ausgebildetes Gehäuseteil mit einer endständigen Öffnung und ein Deckelbauteil, das die endständige Öffnung des becherförmig ausgebildeten Gehäuseteils verschließt.

Bevorzugt weist das Deckelbauteil einen kreisförmigen Umfang auf und ist derart in der kreisförmigen Öffnung des becherförmig ausgebildeten Gehäuseteils angeordnet, dass der Rand entlang einer umlaufenden Kontaktzone an der Innenseite des becherförmig ausgebildeten Gehäuseteils anliegt, wobei der Rand des Deckelbauteils mit dem becherförmig ausgebildeten Gehäuseteil über eine umlaufende Schweißnaht verbunden ist. In diesem Fall weisen die beiden Gehäuseteile bevorzugt die gleiche Polarität auf, sind also elektrisch entweder mit einer positiven oder einer negativen Elektrode gekoppelt. Das Gehäuse umfasst in diesem Fall noch eine Poldurchführung, die zur elektrischen Kontaktierung der nicht elektrisch mit dem Gehäuse verbundenen Elektrode dient.

In einer alternativen Ausführungsform ist auf den Rand des Deckelbauteils eine elektrisch isolierende Dichtung aufgezogen, die das Deckelbauteil von dem becherförmigen Gehäuseteil elektrisch trennt. In diesem Fall ist das Gehäuse meist durch einen Crimp-Verschluss abgedichtet.

Bevorzugt liegt die Höhe als zylindrische Rundzelle ausgebildeter Energiespeicherelemente im Bereich von 50 mm bis 150 mm. Der Durchmesser der zylindrischen Rundzellen liegt bevorzugt im Bereich von 15 mm bis 60 mm. Zylindrische Rundzellen mit diesen Formfaktoren eignen sich insbesondere zur Stromversorgung elektrischer Antriebe von Kraftfahrzeugen.

Der Anodenstromkollektor, der Kathodenstromkollektor und der Separator oder die Separatoren weisen in Ausführungsformen, bei denen die erfindungsgemäße Zelle eine zylindrische Rundzelle ist, bevorzugt die folgenden Dimensionen auf:
- Eine Länge im Bereich von 0,5 m bis 25 m
- Eine Breite im Bereich 30 mm bis 145 mm

Die Kontaktbleche weisen in dieser Ausführungsform bevorzugt eine kreisförmige Grundform auf.

In einigen bevorzugten Varianten der zylindrischen Ausführungsform zeichnet sich das erfindungsgemäße Energiespeicherelement durch mindestens eines der unmittelbar folgenden Merkmale a. bis d. aus:
a. Die bandförmige positive Elektrode und somit auch der aus der ersten Stirnseite austretende freie Randstreifen des Kathodenstromkollektors umfasst in dem Wickel eine radiale Abfolge benachbarter Windungen.
b. Die langgestreckte Erhebung des freien Randstreifens des Kathodenstromkollektors weist radial nach außen oder radial nach innen.
c. Die bandförmige positive Elektrode umfasst mindestens eine Windung, vorzugsweise eine Vielzahl von Windungen, bei der oder denen die langgestreckte Erhebung des freien Randstreifens des Kathodenstromkollektors in die langgestreckte Vertiefung oder Einbuchtung des freien Randstreifens des Kathodenstromkollektors einer radial benachbarten Windung eingeschoben ist.
d. Der freie Randstreifen des Kathodenstromkollektors bildet in Blickrichtung senkrecht auf die erste Stirnseite eine durchgehende Metallschicht aus, die mindestens 80 % der Stirnseite abdeckt.

Bevorzugt sind die unmittelbar vorstehenden Merkmale a. bis c., besonders bevorzugt sogar die Merkmale a. bis d., in Kombination miteinander realisiert.

Diese Ausführungsform ist besonders vorteilhaft. Im Idealfall ist die durchgehende Metallschicht eine geschlossene Schicht, die die erste Stirnseite vollständig bedeckt.

Die bei der Herstellung des Wickels gebildeten benachbarten Windungen weisen unterschiedliche Durchmesser auf. Innenliegende Windungen haben stets einen kleineren Durchmesser als außenliegende, oder mit anderen Worten, der Durchmesser des Wickels nimmt mit jeder Windung des Wickels nach außen hin zu.

In einigen weiteren besonders bevorzugten Varianten der zylindrischen Ausführungsform zeichnet sich das erfindungsgemäße Energiespeicherelement durch mindestens eines der unmittelbar folgenden Merkmale a. bis d. aus:
a. Die bandförmige negative Elektrode und somit auch der aus einer der Stirnseiten austretende freie Randstreifen des Anodenstromkollektors umfasst in dem Wickel eine radiale Abfolge benachbarter Windungen.
b. Die langgestreckte Erhebung des freien Randstreifens des Anodenstromkollektorsweist radial nach außen oder radial nach innen.
c. Die bandförmige negative Elektrode umfasst mindestens eine Windung, vorzugsweise eine Vielzahl von Windungen, bei der oder denen die langgestreckte Erhebung des freien Randstreifens des Anodenstromkollektors in die langgestreckte Vertiefung oder Einbuchtung des freien Randstreifens des Anodenstromkollektors einer radial benachbarten Windung eingeschoben ist.
d. Der freie Randstreifen des Anodenstromkollektors bildet in Blickrichtung senkrecht auf die zweite Stirnseite eine durchgehende Metallschicht aus, die mindestens 80% der Stirnseite abdeckt.

Auch hier ist es bevorzugt, dass die unmittelbar vorstehenden Merkmale a. bis c., besonders bevorzugt sogar die Merkmale a. bis d., in Kombination miteinander realisiert sind.

### Prismatische Ausführungsform

In der prismatischen Ausführungsform zeichnet sich das erfindungsgemäße Energiespeicherelement durch die unmittelbar folgenden Merkmale a. bis d. aus:
a. Der Verbundkörper liegt in Form eines prismatischen Stapels vor, in dem die Kathode und die Anode gemeinsam mit weiteren Kathoden und Anoden gestapelt vorliegen.
b. Die Elektroden und die Stromkollektoren sowie die Schichten aus den Elektrodenmaterialien sind polygonal, insbesondere rechteckig, ausgebildet.
c. Es umfasst mindestens einen bandförmigen oder polygonalen, insbesondere rechteckigen, Separator oder mindestens einen bandförmigen oder polygonalen, insbesondere rechteckigen, Festelektrolyten,
d. Der Stapel ist von einem prismatischen Gehäuse umschlossen.

In dem Stapel sind entgegengesetzt gepolten Elektroden stets voneinander durch eine Separator- oder Festelektrolytschicht getrennt.

Das prismatische Gehäuse setzt sich bevorzugt aus einem becherförmigen Gehäuseteil mit einer endständigen Öffnung und einem Deckelbauteil zusammen. Der Boden des becherförmigen Gehäuseteils und das Deckelbauteil weisen in dieser Ausführungsform bevorzugt eine polygonale, besonders bevorzugt eine rechteckige Grundfläche, auf. Die Form der endständigen Öffnung des becherförmigen Gehäuseteils entspricht der Form des Bodens und des Deckelbauteils. Darüber hinaus umfasst das Gehäuse mehrere, bevorzugt vier, rechteckige Seitenteile, die den Boden und das Deckelbauteil miteinanderverbinden.

Die Separatorschichten können von mehreren Separatoren gebildet werden, die jeweils zwischen benachbarten Elektroden angeordnet sind. Es ist aber auch möglich, dass ein bandförmiger Separator die Elektroden des Stapels voneinander separiert. Im Falle mehrerer Separatoren zwischen den Anoden und Kathoden weisen die Separatoren bevorzugt ebenfalls eine polygonale, insbesondere rechteckige, Grundfläche auf.

Die Kontaktbleche weisen in dieser Ausführungsform bevorzugt eine rechteckige Grundform auf.

In einigen bevorzugten Varianten der prismatischen Ausführungsform zeichnet sich das erfindungsgemäße Energiespeicherelement durch mindestens eines der unmittelbar folgenden Merkmale a. bis d. aus:
a. Jede der Kathoden des Stapels ist durch den Randstreifen mit dem U- oder V-förmigen Querschnitt gekennzeichnet.
b. Jede der Anoden des Stapels ist durch den Randstreifen mit dem U- oder V-förmigen Querschnitt gekennzeichnet.
c. Die freien Randstreifen der Kathodenstromkollektoren der Kathoden des Stapels treten aus einer Seite des Stapels aus und stehen mit dem ersten Kontaktblech in unmittelbarem Kontakt.
d. Die freien Randstreifen der Anodenstromkollektoren der Anoden des Stapels treten aus einer anderen Seite des Stapels aus und stehen mit dem zweiten Kontaktblech in unmittelbarem Kontakt.

Bevorzugt sind die unmittelbar vorstehenden Merkmale a. und c. sowie b. und d. in Kombination miteinander realisiert. Besonders bevorzugt sind die Merkmale a. bis d., in Kombination miteinander realisiert.

In weiteren bevorzugten Varianten der prismatischen Ausführungsform zeichnet sich das erfindungsgemäße Energiespeicherelement durch mindestens eines der unmittelbar folgenden Merkmale a. bis d. aus:
a. Die freien Randstreifen der Kathodenstromkollektoren sind parallel zueinander angeordnet.
b. Die langgestreckten Erhebungen der freien Randstreifen benachbarter Kathodenstromkollektoren weisen in die gleiche Richtung.
c. Benachbarte Randstreifen der freien Randstreifen der Kathodenstromkollektoren sind mit den freien Randstreifen benachbarter Kathodenstromkollektoren gekoppelt, indem ihre langgestreckten Erhebungen in die langgestreckten Vertiefungen oder Einbuchtungen der freien Randstreifen der benachbarten Kathodenstromkollektoren eingeschoben sind.
d. Die freien Randstreifen der Kathodenstromkollektoren bilden in Blickrichtung senkrecht auf die Seite des Stapels, aus der sie austreten, eine durchgehende Metallschicht aus, die mindestens 80% der Seite vollständig abdeckt.

Bevorzugt sind die unmittelbar vorstehenden Merkmale a. bis c., besonders bevorzugt sogar die Merkmale a. bis d., in Kombination miteinander realisiert.

In weiteren bevorzugten Varianten der prismatischen Ausführungsform zeichnet sich das erfindungsgemäße Energiespeicherelement durch mindestens eines der unmittelbar folgenden Merkmale a. bis d. aus:
a. Die freien Randstreifen der Anodenstromkollektoren sind parallel zueinander angeordnet.
b. Die langgestreckten Erhebungen derfreien Randstreifen benachbarter Anodenstromkollektoren weisen in die gleiche Richtung.
c. Benachbarte Randstreifen derfreien Randstreifen der Anodenstromkollektoren sind mit den freien Randstreifen benachbarter Anodenstromkollektoren gekoppelt, indem ihre langgestreckten Erhebungen in die langgestreckten Vertiefungen oder Einbuchtungen der freien Randstreifen der benachbarten Anodenstromkollektoren eingeschoben sind.
d. Die freien Randstreifen der Anodenstromkollektoren bilden in Blickrichtung senkrecht auf die Seite des Stapels, aus der sie austreten, eine durchgehende Metallschicht aus, die mindestens 80% der Seite vollständig abdeckt.

Bevorzugt sind die unmittelbar vorstehenden Merkmale a. bis c., besonders bevorzugt sogar die Merkmale a. bis d., in Kombination miteinander realisiert.

### Bevorzugte elektrochemische Ausführungsform

In einer weiteren besonders bevorzugten Ausführungsform der Erfindung zeichnet sich das erfindungsgemäße Energiespeicherelement durch eines der folgenden Merkmale aus:
a. Das Energiespeicherelement ist eine Lithium-Ionen-Zelle.
b. Das Energiespeicherelement umfasst eine Lithium-Ionen-Zelle.

Merkmal a. bezieht sich insbesondere auf die beschriebene Ausführungsform des erfindungsgemäßen Energiespeicherelements als zylindrische Rundzelle. In dieser Ausführungsform umfasst das Energiespeicherelement bevorzugt genau eine elektrochemische Zelle.

Merkmal b. bezieht sich insbesondere auf die beschriebene prismatische Ausführungsform des erfindungsgemäßen Energiespeicherelements. In dieser Ausführungsform kann das Energiespeicherelement auch mehr als eine elektrochemische Zelle umfassen.

Für die Elektroden des Energiespeicherelements können im Grunde sämtliche für sekundäre Lithium-Ionen-Zellen bekannten Elektrodenmaterialien verwendet werden.

In den negativen Elektroden können als Aktivmaterialien Partikel auf Kohlenstoffbasis wie graphitischer Kohlenstoff oder zur Interkalation von Lithium befähigte, nicht-graphitische Kohlenstoffmaterialien, bevorzugt ebenfalls in Partikelform, eingesetzt werden. Alternativ oder zusätzlich kann auch Lithiumtitanat (Li₄Ti₅O₁₂) oder ein Derivat desselben in der negativen Elektrode enthalten sein, bevorzugt ebenfalls in Partikelform. Weiterhin kann die negative Elektrode als Aktivmaterial mindestens ein Material aus der Gruppe mit Silizium, Aluminium, Zinn, Antimon oder eine Verbindung oder Legierung dieser Materialien, die Lithium reversibel ein- und auslagern kann, beispielsweise Siliziumoxid, enthalten, gegebenenfalls in Kombination mit Aktivmaterialien auf Kohlenstoffbasis.

Zinn, Aluminium, Antimon und Silizium in der Lage, mit Lithium intermetallische Phasen zu bilden. Die Kapazität zur Aufnahme von Lithium übersteigt dabei, insbesondere im Fall von Silizium, die von Graphit oder vergleichbaren Materialien um ein Vielfaches. Weiterhin sich auch dünne Anoden aus metallischem Lithium.

Für die positiven Elektroden kommen als Aktivmaterialien beispielsweise Lithium-Metalloxid-Verbindungen und Lithium-Metallphosphat-Verbindungen wie LiCoO₂ und LiFePO₄ in Frage. Weiterhin gut geeignet sind insbesondere Lithiumnickelmangancobaltoxid (NMC) mit der Summenformel Li-NiₓMn_{y}Co_{z}O₂ (wobei x + y + z typischerweise 1 ist), Lithiummanganspinell (LMO) mit der Summenformel LiMn₂O₄, oder Lithiumnickelcobaltaluminiumoxid (NCA) mit der Summenformel LiNiₓCo_{y}Al_{z}O₂ (wobei x + y + z typischerweise 1 ist). Auch Derivate hiervon, beispielsweise Lithiumnickelmangancobaltaluminiumoxid (NMCA) mit der Summenformel Li_{1.11}(Ni_{0.40}Mn_{0.39}Co_{0.16}Al_{0.05})_{0.89}O₂ oder Li₁₊ₓM-O Verbindungen und/oder Mischungen der genannten Materialien können eingesetzt werden. Auch die kathodischen Aktivmaterialien werden bevorzugt partikulär eingesetzt.

Daneben enthalten die Elektroden eines erfindungsgemäßen Energiespeicherelements bevorzugt einen Elektrodenbinder und/oder ein Additiv zur Verbesserung der elektrischen Leitfähigkeit. Die Aktivmaterialien sind bevorzugt in eine Matrix aus dem Elektrodenbinder eingebettet, wobei benachbarte Partikel in der Matrix bevorzugt in unmittelbarem Kontakt miteinanderstehen. Leitmittel dienen dazu, die elektrische Leitfähigkeit der Elektroden zu erhöhen. Übliche Elektrodenbinder basieren beispielsweise auf Polyvinylidenfluorid (PVDF), Polyacrylat oder Carboxymethylzellulose. Übliche Leitmittel sind Ruß und Metallpulver.

Das erfindungsgemäße Energiespeicherelement umfasst bevorzugt einen Elektrolyten, im Falle einer Lithium-Ionen-Zelle insbesondere einen Elektrolyten auf der Basis mindestens eines Lithiumsalzes wie beispielsweise Lithiumhexafluorophosphat (LiPF₆), das in einem organischen Lösungsmittel gelöst vorliegt (z. B. in einer Mischung organischer Carbonate oder einem cyclischen Ether wie THF oder einem Nitril). Andere einsetzbare Lithium-Salze sind beispielsweise Lithiumtetrafluoroborat (LiBF₄), Lithiumbis(trifluoromethansulfonyl)imid (LiTFSI), Lithiumbis(fluorosulfonyl)imid (LiFSI) und Lithiumbis(oxalato)borat (LiBOB).

Die Nennkapazität eines als zylindrische Rundzelle ausgebildeten erfindungsgemäßen Energiespeicherelements auf Lithium-Ionen-Basis beträgt bevorzugt bis zu 90000 mAh. Mit dem Formfaktor von 21 x70 hat das Energiespeicherelement in einer Ausführungsform als Lithium-Ionen-Zelle bevorzugt eine Nennkapazität im Bereich von 1500 mAh bis 7000 mAh, besonders bevorzugt im Bereich von 3000 bis 5500 mAh. Mit dem Formfaktor von 18 x 65 hat die Zelle in einer Ausführungsform als Lithium-Ionen-Zelle bevorzugt eine Nennkapazität im Bereich von 1000 mAh bis 5000 mAh, besonders bevorzugt im Bereich von 2000 bis 4000 mAh.

In der Europäischen Union sind Herstellerangaben zu Angaben betreffend die Nennkapazitäten von sekundären Batterien streng reglementiert. So haben etwa Angaben zur Nennkapazität von sekundären Nickel-Cadmium-Batterien auf Messungen gemäß den Normen IEC/EN 61951-1 und IEC/EN 60622, Angaben zur Nennkapazität von sekundären Nickel-Metallhydrid-Batterien auf Messungen gemäß der Norm IEC/EN 61951-2, Angaben zur Nennkapazität von sekundären Lithium-Batterien auf Messungen gemäß der Norm IEC/EN 61960 und Angaben zur Nennkapazität von sekundären Blei-Säure-Batterien auf Messungen gemäß der Norm IEC/EN 61056-1 zu basieren. Jegliche Angaben zu Nennkapazitäten in der vorliegenden Anmeldung basieren bevorzugt ebenfalls auf diesen Normen.

### Bevorzugte Ausführungsformen des Separators und des Festelektrolyten

Bevorzugt werden der Separator oder die Separatoren aus elektrisch isolierenden Kunststofffolien gebildet. Es ist bevorzugt, dass die Separatoren von dem Elektrolyten durchdrungen werden kann. Zu diesem Zweck können die verwendeten Kunststofffolien beispielsweise Mikroporen aufweisen. Die Folie kann beispielsweise aus einem Polyolefin oder aus einem Polyetherketon bestehen. Auch Vliese und Gewebe aus Kunststoffmaterialien oder andere elektrisch isolierende Flächengebilde können als Separator zum Einsatz kommen. Bevorzugt werden Separatoren eingesetzt, die eine Dicke im Bereich von 5 µm bis 50 µm aufweisen.

Insbesondere bei den prismatischen Ausführungsformen des Energiespeicherelements kann es sich bei dem Separator oder den Separatoren des Verbundes auch um eine oder mehrere Schichten aus einem Festelektrolyten handeln.

Bei dem Festelektrolyten handelt es sich beispielsweise um einen Polymerfestkörperelektrolyten basierend auf einem Polymer-Leitsalzkomplex, der einphasig ohne jegliche Flüssigkomponente vorliegt. Als Polymermatrix kann ein Polymerfestkörperelektrolyt Polyacrylsäure (PAA), Polyethylenglycol (PEG) oder Polymethylmethacrylat (PMMA) aufweisen. In diesen können Lithium-Leitsalze wie beispielsweise Lithium-bis-(trifluoromethan)sulfonylimid (LiTFSI), Lithiumhexafluorophosphat (LiPF₆) und Lithiumtetrafluoroborat (LiBF₄) gelöst vorliegen.

### Bevorzugte Struktur eines als Wickel ausgebildeten Verbundkörpers

In dem als Wickel ausgebildeten Verbundkörper liegen die bandförmige Anode, die bandförmige Kathode und der oder die bandförmigen Separatoren bevorzugt spiralförmig aufgewickeit vor. Zur Herstellung des Verbundkörpers werden die bandförmigen Elektroden gemeinsam mit dem oder den bandförmigen Separatoren einer Wickelvorrichtung zugeführt und bevorzugt in dieser um eine Wickelachse herum spiralförmig aufgewickelt. In einigen Ausführungsformen werden die Elektroden und der Separator hierzu auf einen zylindrischen oder hohlzylindrischen Wickelkern aufgewickelt, der auf einem Wickeldorn sitzt und nach dem Wickeln im Wickel verbleibt.

Der Wickelmantel kann beispielsweise durch eine Kunststofffolie oder ein Klebeband gebildet sein. Es ist auch möglich, dass der Wickelmantel durch eine oder mehrere Separatorwindungen gebildet ist.

### Bevorzugte Ausführungsformen der Stromkollektoren

Die Stromkollektoren des Energiespeicherelements dienen dazu, im jeweiligen Elektrodenmaterial enthaltene elektrochemisch aktive Komponenten möglichst großflächig elektrisch zu kontaktieren. Bevorzugt bestehen die Stromkollektoren aus einem Metall oder sind zumindest oberflächlich metallisiert. Im Falle eines Energiespeicherelements auf Basis von Lithium-Ionen-Technologie eignen sich als Metall für den Anodenstromkollektor beispielsweise Kupfer oder Nickel oder auch andere elektrisch leitfähige Materialien, insbesondere Kupfer- und Nickellegierungen oder mit Nickel beschichtete Metalle. Auch Edelstahl kommt grundsätzlich in Frage. Als Metall für den Kathodenstromkollektor eignen sich im Falle eines Energiespeicherelements auf Basis von Lithium-Ionen-Technologie insbesondere Aluminium oder auch andere elektrisch leitfähige Materialien, darunter auch Aluminiumlegierungen.

Bevorzugt handelt es sich bei dem Anodenstromkollektor und/oder dem Kathodenstromkollektor jeweils um eine Metallfolie mit einer Dicke im Bereich von 4 µm bis 30 µm, im Fall der beschriebenen Konfiguration des Energiespeicherelements als zylindrische Rundzelle um eine bandförmige Metallfolie mit einer Dicke im Bereich von 4 µm bis 30 µm.

Neben Folien können als Stromkollektoren allerdings auch andere bandförmige Substrate wie metallische oder metallisierte Vliese oder offenporige metallische Schäume oder Streckmetalle verwendet werden.

Im Fall der beschriebenen Konfiguration des Energiespeicherelements als zylindrische Rundzelle ist es bevorzugt, dass die Längsränder des oder der Separatoren die Stirnseiten des als Wickel ausgebildeten Verbundkörpers bilden.

Im Fall der beschriebenen prismatischen Konfiguration des Energiespeicherelements ist es bevorzugt, dass die Ränder des oder der Separatoren die Seiten des Stapels bilden, aus denen die freien Randstreifen der Stromkollektoren hervortreten.

Es ist weiterhin bevorzugt, dass die aus den endständigen Stirnseiten des Wickels oder Seiten des Stapels austretenden freien Randstreifen der Stromkollektoren nicht mehr als 5500 µm, bevorzugt nicht mehr als 4000 µm, aus den Stirnseiten oder den Seiten herausragen.

Besonders bevorzugt ragt der freie Randstreifen des Anodenstromkollektors aus der Seite des Stapels oder der Stirnseite des Wickels nicht mehr als 3000 µm, besonders bevorzugt nicht mehr als 2000 µm, heraus. Besonders bevorzugt ragt der freie Randstreifen des Kathodenstromkollektors aus der Seite des Stapels oder der Stirnseite des Wickels nicht mehr als 4000 µm, besonders bevorzugt nicht mehr als 3000 µm, heraus.

### Bevorzugte Ausführungsformen des ersten Kontaktblechs / Anbindung des ersten Kontaktblechs an den Anodenstromkollektor

Das erste Kontaktblech ist bevorzugt mit Anodenstromkollektor elektrisch verbunden. Besonders bevorzugt ist es mit dem freien Randstreifen des Anodenstromkollektors unmittelbar durch Verschweißung verbunden.

Zusätzlich oder n einer alternativen Ausführungsform kann das erste Kontaktblech mit dem freien Randstreifen des Anodenstromkollektors aber auch mechanisch, beispielsweise durch eine Pressverbindung oder eine Klemmverbindung oder eine Federverbindung, verbunden sein.

In einer besonders bevorzugten Ausführungsform der Erfindung zeichnet sich das erste Kontaktblech durch mindestens eines der unmittelbar folgenden Merkmale a. oder b. aus:
a. Das Kontaktblech besteht aus Nickel oder Kupfer oder Titan oder eine Nickel- oder Kupfer- oder Titanlegierung oder Edelstahl.
b. Das Kontaktblech besteht aus dem gleichen Material wie der Anodenstromkollektor.

Es ist bevorzugt, dass die unmittelbar vorstehenden Merkmale a. und b. in Kombination miteinander realisiert sind.

Das Kontaktblech ist entweder mit dem Gehäuse elektrisch verbunden oder aber mit einem Kontaktpol, der durch das Gehäuse geführt und gegenüber dem Gehäuse elektrisch isoliert ist. Der elektrische Kontakt kann hierbei durch unmittelbar Verschweißung oder eine mechanische Verbindung realisiert sein. Gegebenenfalls kann die elektrische Verbindung auch über einen separaten elektrischen Leiter bestehen.

In einer weiteren besonders bevorzugten Ausführungsform der Erfindung zeichnet sich das erste Kontaktblech durch mindestens eines der unmittelbar folgenden Merkmale a. bis g. aus:
a. Das Kontaktblech weist eine bevorzugt gleichmäßige Dicke im Bereich von 50 µm bis 600 µm, bevorzugt im Bereich von 150 µm bis 350 µm, auf.
b. Das Kontaktblech weist zwei sich gegenüberliegenden Flachseiten auf und erstreckt sich im Wesentlichen nur in einer Dimension.
c. Das Kontaktblech ist eine Scheibe oder eine bevorzugt rechteckige Platte.
d. Das Kontaktblech ist derart dimensioniert, dass es mindestens 60 %, bevorzugt mindestens 70 %, besonders bevorzugt mindestens 80 %, der Seite oder Stirnseite, aus der der mit ihm verbundene freie Randstreifen des Anodenstromkollektors heraustritt, abdeckt.
e. Das Kontaktblech weist mindestens eine Durchbrechung, insbesondere mindestens ein Loch und/oder mindestens einen Schlitz, auf.
f. Das Kontaktblech weist mindestens eine Sicke auf, die auf einer Flachseite des Kontaktblechs als längliche Vertiefung und auf der gegenüberliegenden Flachseite als längliche Erhöhung zu Tage tritt, wobei das Kontaktblech mit der Flachseite, welche die längliche Erhöhung trägt, auf dem freien Randstreifen des Anodenstromkollektors aufsitzt.
g. Das Kontaktblech ist im Bereich der Sicke mit dem freien Randstreifen des Anodenstromkollektors verschweißt, insbesondere über eine oder mehrere in der Sicke angeordnete Schweißnähte.

Es ist besonders bevorzugt, dass die unmittelbar vorstehenden Merkmale a. und b. und d. in Kombination miteinander realisiert sind. In einer bevorzugten Ausführungsform sind die Merkmale a. und b. und d. in Kombination mit einem der Merkmale c. oder e. oder den Merkmalen f. und g realisiert. Besonders bevorzugt sind alle Merkmale a. bis g. in Kombination miteinander realisiert.

Die möglichst großflächige Abdeckung der Stirnseite ist für das thermische Management des erdungsgemäßen Energiespeicherelements von Bedeutung. Je größer die Abdeckung ist, desto eher ist es möglich, den ersten Rand des Anodenstromkollektors möglichst über seine gesamte Länge zu kontaktieren. Im Verbundkörper gebildete Wärme kann so gut über das Kontaktblech abgeführt werden.

Die mindestens eine Durchbrechung in dem Kontaktblech kann beispielsweise zweckmäßig sein, um den Verbundkörper mit einem Elektrolyten tränken zu können.

### Bevorzugte Ausführungsformen des zweiten Kontaktblechs / Anbindung des zweiten Kontaktblechs an den Kathodenstromkollektor

Das zweite Kontaktblech ist bevorzugt mit dem Kathodenstromkollektor elektrisch verbunden. Besonders bevorzugt ist es mit dem freien Randstreifen des Kathodenstromkollektors unmittelbar durch Verschweißung verbunden.

In einer alternativen Ausführungsform kann das zweite Kontaktblech mit dem freien Randstreifen des Kathodenstromkollektors aber auch mechanisch, beispielsweise durch eine Pressverbindung, eine Federverbindung oder eine Klemmverbindung, verbunden sein.

In einer besonders bevorzugten Ausführungsform der Erfindung zeichnet sich das erfindungsgemäße Energiespeicherelement durch das unmittelbar folgende Merkmal a. aus:
a. Das zweite Kontaktblech besteht aus Aluminium oder aus einer Aluminiumlegierung.

Das Kontaktblech ist entweder mit dem Gehäuse elektrisch verbunden oder aber mit einem Kontaktpol, der durch das Gehäuse geführt und gegenüber dem Gehäuse elektrisch isoliert ist. Der elektrische Kontakt kann hierbei durch unmittelbar Verschweißung oder eine mechanische Verbindung realisiert sein. Gegebenenfalls kann die elektrische Verbindung auch über einen separaten elektrischen Leiter bestehen.

Das zweite Kontaktblech ist bevorzugt, abgesehen von seiner materiellen Beschaffenheit, ähnlich dem auf dem freien Randstreifen des Anodenstromkollektors aufsitzenden Kontaktblech ausgebildet. Es zeichnet sich bevorzugt durch mindestens eines der unmittelbar folgenden Merkmale a. bis g. aus:
a. Das zweite Kontaktblech weist eine bevorzugt gleichmäßige Dicke im Bereich von 50 µm bis 600 µm, bevorzugt im Bereich von 150 µm bis 350 µm, auf.
b. Das zweite Kontaktblech weist zwei sich gegenüberliegenden Flachseiten auf und erstreckt sich im Wesentlichen nur in einer Dimension.
c. Das zweite Kontaktblech ist eine Scheibe oder eine bevorzugt rechteckige Platte.
d. Das zweite Kontaktblech ist derart dimensioniert, dass es mindestens 60 %, bevorzugt mindestens 70 %, besonders bevorzugt mindestens 80 %, der Seite oder Stirnseite, aus der der freien Randstreifen des Kathodenstromkollektors heraustritt, abdeckt.
e. Das zweite Kontaktblech weist mindestens eine Durchbrechung, insbesondere mindestens ein Loch und oder mindestens einen Schlitz, auf.
f. Das zweite Kontaktblech weist mindestens eine Sicke auf, die auf einer Flachseite des Kontaktblechs als längliche Vertiefung und auf der gegenüberliegenden Flachseite als längliche Erhöhung zu Tage tritt, wobei das Kontaktblech mit der Flachseite, welche die längliche Erhöhung trägt, auf dem freien Randstreifen des Kathodenstromkollektors aufsitzt.
g. Das zweite Kontaktblech ist im Bereich der Sicke mit dem freien Randstreifen des Kathodenstromkollektors verschweißt, insbesondere über eine oder mehrere in der Sicke angeordnete Schweißnähte.

Auch hier ist es besonders bevorzugt, dass die unmittelbar vorstehenden Merkmale a. und b. und d. in Kombination miteinander realisiert sind. In einer bevorzugten Ausführungsform sind die Merkmale a. und b. und d. in Kombination mit einem der Merkmale c. oder e. oder den Merkmalen f. und g realisiert. Besonders bevorzugt sind auch hier alle Merkmale a. bis g. in Kombination miteinander realisiert.

Die Anbindung bzw. Anschweißung des freien Randstreifens des Kathodenstromkollektors an das zweite Kontaktblech ist bevorzugt analog zur oben beschriebenen Anbindung des freien Randstreifens des Anodenstromkollektors realisiert, also besonders bevorzugt über eine Verschweißung im Bereich der Sicke.

In bevorzugten Ausführungsformen ist das zweite Kontaktblech unmittelbar mit dem Boden des becherförmigen Gehäuseteils oder einem Teil des Bodens verschweißt. In weiteren bevorzugten Ausführungsformen ist das zweite Kontaktblech über einen separaten Stromleiter mit dem Boden des becherförmigen Gehäuseteils verbunden. In letzterem Fall ist es bevorzugt, dass der separate Stromleitersowohl mit dem Boden des becherförmigen Gehäuseteils als auch mit dem zweiten Kontaktblech verschweißt ist. Der separate Stromleiter besteht bevorzugt aus Aluminium oder einer Aluminiumlegierung.

### Bevorzugte Ausgestaltung der Gehäuseteile

In einer weiteren besonders bevorzugten Ausführungsform der Erfindung zeichnet sich das erfindungsgemäße Energiespeicherelement durch mindestens eines der unmittelbar folgenden Merkmale a. und b. aus:
a. Das becherförmig ausgebildete Gehäuseteil besteht aus Aluminium, Edelstahl oder einem vernickelten Stahl.
b. Das Deckelbauteil besteht aus Aluminium, Edelstahl oder einem vernickelten Stahl.

Besonders bevorzugt sind die unmittelbar vorstehenden Merkmale a. und b. in Kombination realisiert.

In einigen Ausführungsformen ist eine direkte Anbindung des freien Randstreifens des Kathodenstromkollektors an das Gehäuse wünschenswert. Zu diesem Zweck kann der freie Randstreifen beispielsweise mittels eines Lasers an den Boden des becherförmig ausgebildeten Gehäuseteils geschweißt werden. Der Boden des becherförmig ausgebildeten Gehäuseteils dient in diesem Fall als zweite Kontaktplatte.

Umgekehrt kann es in einigen Ausführungsformen vorgesehen sein, dass die erste Kontaktplatte als Deckelbauteil dient, also als Teil des Gehäuses dient.

### Bevorzugte Ausgestaltung der Elektroden

In einer weiteren besonders bevorzugten Ausführungsform der Erfindung zeichnet sich das erfindungsgemäße Energiespeicherelement durch eines der unmittelbar folgenden Merkmale a. oder b. aus:
a. Das erfindungsgemäße Energiespeicherelement ist als zylindrische Rundzelle ausgebildet und seine Elektroden weisen eine Dicke im Bereich von 40 µm bis 300 µm, bevorzugt im Bereich von 40 µm bis 100 µm, auf.
b. Das erfindungsgemäße Energiespeicherelement ist prismatisch ausgebildet und seine Elektroden weisen eine Dicke im Bereich von 40 µm bis 1000 µm, bevorzugt eine Dicke > 100 µm bis maximal 300 µm, auf.

### Erfindungsgemäßes Verfahren

Das erfindungsgemäße Verfahren dient zur Herstellung des oben beschriebenen Energiespeicherelements, insbesondere eines Energiespeicherelements mit den folgenden Merkmalen:
a. Es umfasst eine Kathode und eine Anode, die Teile eines Verbundkörpers sind, in dem sie, getrennt durch eine Separator- oder Festelektrolytschicht, in der Sequenz Kathode / Separator- oder Festelektrolytschicht / Anode vorliegen,
b. die Kathode umfasst einen Kathodenstromkollektor und ein positives Elektrodenmaterial,
c. der Kathodenstromkollektor weist
   - einen Hauptbereich, der beidseitig mit einer Schicht aus dem positiven Elektrodenmaterial beladen ist, sowie
   - einen freien Randstreifen, der sich entlang eines Rands des Kathodenstromkollektors erstreckt und der nicht mit dem positiven Elektrodenmaterial beladen ist, auf,
d. die Anode umfasst einen Anodenstromkollektor und ein negatives Elektrodenmaterial,
e. der Anodenstromkollektor weist
   - einen Hauptbereich, der beidseitig mit einer Schicht aus dem negativen Elektrodenmaterial beladen ist, sowie
   - einen freien Randstreifen, der sich entlang eines Rands des Anodenstromkollektors erstreckt und der nicht mit dem negativen Elektrodenmaterial beladen ist, auf,
f. die Kathode und die Anode sind derart ausgebildet und/oder innerhalb des Elektroden-Separator-Verbunds derart zueinander angeordnet, dass der freie Randstreifen des Kathodenstromkollektors aus einer Seite des Verbundkörpers und der freie Randstreifen des Anodenstromkollektors aus einer anderen Seite des Verbundkörpers austritt, und
g. das Energiespeicherelement umfasst ein erstes Kontaktblech, das mit einem der freien Randstreifen in unmittelbarem Kontakt steht, und ein zweites Kontaktblech, das mit dem anderen der freien Randstreifen in unmittelbarem Kontakt steht.

Bezüglich bevorzugter Ausführungsformen der einzelnen Komponenten des herzustellenden Energiespeicherelements wird auf die obigen Ausführungen im Zusammenhang mit der Erläuterung des erfindungsgemäßen Energiespeicherelements verwiesen.

Das Verfahren zeichnet sich insbesondere durch den folgenden Schritt aus:
h. Vor der Bildung des Verbundkörpers wird mindestens einer Randstreifen einem Umformvorgang unterworfen, in Folge dessen er einen U-förmigen oder V-förmigen Querschnitt und somit auf einer Seite eine langgestreckte Vertiefung oder Einbuchtung und auf der anderen Seite eine zu der Vertiefung korrespondierende langgestreckte Erhebung aufweist.

In einer besonders bevorzugten Ausführungsformen zeichnet sich das Verfahren zusätzlich durch den folgenden Schritt aus:
a. Zur Umformung wird der umzuformende Randstreifen durch einen durch Rollen oder Walzen gebildeten V- oder U-förmigen Spalt geführt.

In einer weiteren besonders bevorzugten Ausführungsformen zeichnet sich das Verfahren zusätzlich durch eine Kombination der unmittelbar folgenden Schritte a. bis e. aus:
a. Zur Bildung des Verbundkörpers werden bandförmige Elektroden mit bandförmigen Stromkollektoren und bandförmigen Schichten aus den Elektrodenmaterialien verwendet,
b. Zur Bildung des Verbundkörpers wird mindestens ein bandförmiger Separator oder mindestens eine bandförmige Festelektrolytschicht verwendet,
c. Der Verbundkörper wird in Form eines zylindrischen Wickels gebildet, indem die Elektroden und der mindestens eine bandförmige Separator oder die mindestens eine bandförmige Festelektrolytschicht spiralförmig um eine Wickelachse herum aufgewickelt werden,
d. Beim Aufwickeln der Elektroden entsteht eine Abfolge benachbarter Windungen, und
e. Beim Aufwickeln der Elektroden wird die langgestreckte Erhebung des Randstreifens einer Elektrodenwindung in die langgestreckte Vertiefung oder Einbuchtung einer benachbarten Windung eingeschoben.

Diese Verfahrensvariante dient der Herstellung eines Energiespeicherelements in zylindrischer Ausführungsform.

In einer weiteren besonders bevorzugten Ausführungsformen zeichnet sich das Verfahren zusätzlich durch eine Kombination der unmittelbar folgenden Schritte a. bis f. aus:
a. Zur Bildung des Verbundkörpers werden polygonale Elektroden verwendet,
b. Der Verbundkörper wird in Form eines prismatischen Stapels gebildet, in dem die Kathode und die Anode gemeinsam mit weiteren Kathoden und Anoden gestapelt vorliegen,
c. Jede der Kathoden des Stapels ist durch den Randstreifen mit dem U- oder V-förmigen Querschnitt gekennzeichnet.
d. Jede der Anoden des Stapels ist durch den Randstreifen mit dem U- oder V-förmigen Querschnitt gekennzeichnet.
e. Bei der Bildung des Stapels werden die freien Randstreifen der Kathodenstromkollektoren mit den freien Randstreifen benachbarter Kathodenstromkollektoren gekoppelt, indem ihre langgestreckten Erhebungen in die langgestreckten Vertiefungen oder Einbuchtungen der freien Randstreifen der benachbarten Kathodenstromkollektoren eingeschoben werden.
f. Bei der Bildung des Stapels werden die freien Randstreifen der Anodenstromkollektoren mit den freien Randstreifen benachbarter Kathodenstromkollektoren gekoppelt, indem ihre langgestreckten Erhebungen in die langgestreckten Vertiefungen oder Einbuchtungen der freien Randstreifen der benachbarten Kathodenstromkollektoren eingeschoben werden.

Diese Verfahrensvariante dient der Herstellungeines Energiespeicherelements in prismatischer Ausführungsform.

### KURZBESCHREIBUNG DER ZEICHNUNGEN

Weitere Merkmale und Vorteile der Erfindung ergeben sich aus den Ansprüchen und aus der nachfolgenden Beschreibung von bevorzugten Ausführungsbeispielen der Erfindung in Verbindung mit den Zeichnungen. Die einzelnen Merkmale können dabei jeweils für sich oder in Kombination miteinander verwirklicht sein.

In den Zeichnungen zeigen schematisch
- Fig.1 eine Zeichnung eines Querschnitts durch eine Zelle des Standes der Technik, bei der eine Kontaktplatte auf einen überstehenden Rand eines Stromkollektors aufgepresst wurde,
- Fig.2 einen beidseitig mit einem positiven Elektrodenmaterial beschichteten Stromkollektor mit einem freien, nicht mit Elektrodenmaterial beschichteten Randstreifen (Draufsicht von oben sowie im Querschnitt),
- Fig.3 einen beidseitig mit einem negativen Elektrodenmaterial beschichteten Stromkollektor mit einem freien, nicht mit Elektrodenmaterial beschichteten Randstreifen (Draufsicht von oben sowie im Querschnitt),
- Fig.4 die Bildung eines Randstreifens mit V-förmigem Querschnitt,
- Fig.5 einen Schnitt durch einige Windungen eines zylindrischen Verbundkörpers, der durch spiralförmiges Aufwickeln einer Kathode und einer Anode gebildet wurde,
- Fig.6 einen Schnitt durch eine weitere Ausführungsform eines zylindrischen Verbundkörpers, derdurch spiralförmiges Aufwickeln einer Kathode und einer Anode gebildet wurde,
- Fig.7 die Bildung eines Randstreifens mit U-förmigem Querschnitt, und
- Fig.8 ein Energiespeicherelement gemäß der Erfindung, umfassend einen prismatischen Verbundkörper und ein Gehäuse dafür, gleichfalls im Querschnitt.

### DETAILLIERTE BESCHREIBUNG DER AUSFÜHRUNGSBEISPIELE

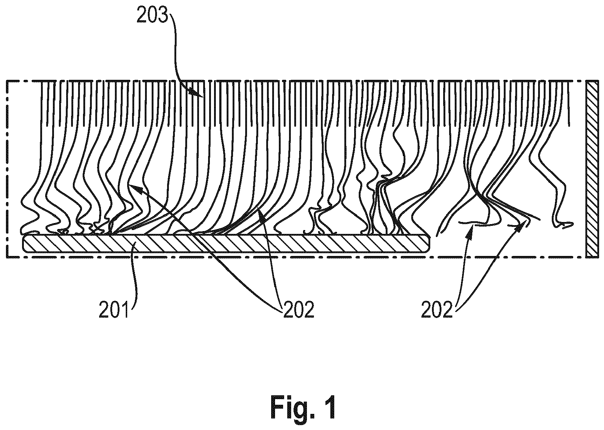

**Fig. 1** illustriert das Resultat eines Aufpressens einer Kontaktplatte 201 auf einen überstehenden Rand 202 eines Stromkollektors, der aus einer Seite eines Verbundkörpers 203 aus negativen und positiven Elektroden sowie dazwischen liegenden Separatoren (in der Zeichnung nicht dargestellt) austritt. Bei dem Aufpressen kam es zu einer unkontrollierten Stauchung des Rands 202 des Stromkollektors. Die Stauchung resultiert wiederum teilweise in undefinierten Faltungen, wie insbesondere im rechten Bereich des Randes 202 gut zu erkennen ist. Ein großflächiger, formschlüssiger Kontakt zwischen dem Stromkollektorrand 202 und der Kontaktplatte 201 wird dadurch erschwert.

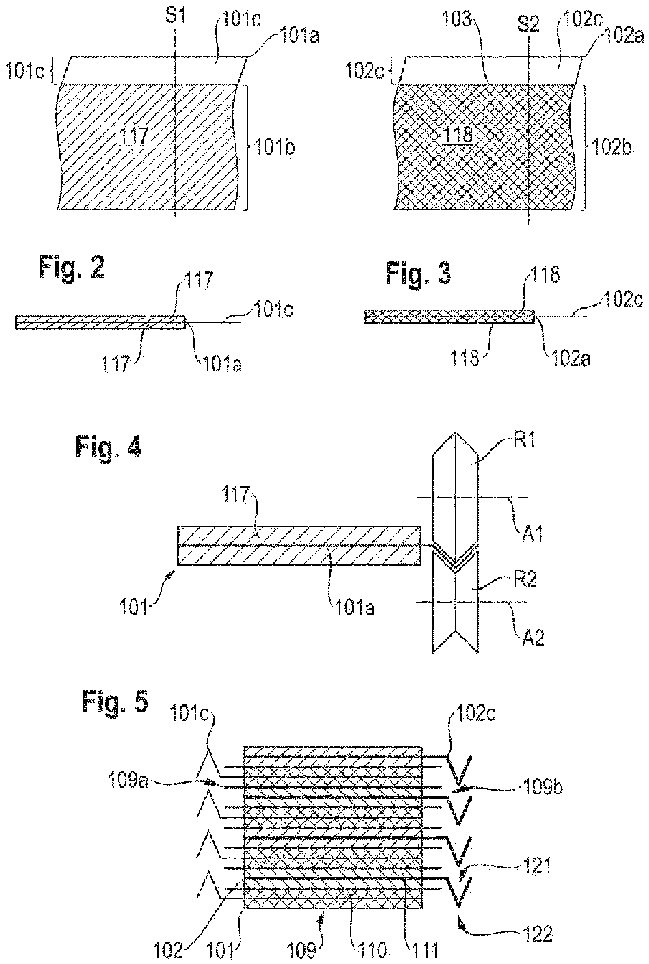

**Fig. 2** zeigt einen Stromkollektor 101a, auf den beidseitig eine Schicht aus einem positiven Elektrodenmaterial 117 aufgebracht ist, zum einen in einer Draufsicht von oben sowie zum anderen in einer Querschnittsdarstellung (Schnitt entlang S1). Bei dem Stromkollektor 101 handelt es sich bevorzugt um eine Aluminiumfolie.

Der bandförmige Stromkollektor 101a umfasst einen mit dem Elektrodenmaterial 117 beladenen Hauptbereich 101b und einen streifenförmigen Randstreifen 101c, der frei von Elektrodenmaterial ist.

**Fig. 3** zeigt einen Stromkollektor 102a, auf den beidseitig eine Schicht aus einem negativen Elektrodenmaterial 118 aufgebracht ist, zum einen in einer Draufsicht von oben sowie zum anderen in einer Querschnittsdarstellung (Schnitt entlang S2). Bei dem Stromkollektor 101 handelt es sich bevorzugt um eine Kupferfolie.

Der bandförmige Stromkollektor 102a umfasst einen mit dem Elektrodenmaterial 118 beladenen Hauptbereich 102b und einen streifenförmigen Randstreifen 102c, der frei von Elektrodenmaterial ist.

**Fig. 4** illustriert die Bildung eines Randstreifens mit V-förmigem Querschnitt. Der freie Randstreifen 101c eines Stromkollektors 101a, wie er in Fig. 2 dargestellt ist, wird in Längsrichtung durch einen von zwei Rollen R1 und R2 gebildeten V-förmigen Spalt geführt. Dabei wird der Randstreifen 101c deformiert und erhält den ihn charakterisierenden V-förmigen Querschnitt mit einer langgestreckten Vertiefung oder Einbuchtung 121 auf einer Seite und eine zu der Vertiefung 121 korrespondierende langgestreckte Erhebung 122 auf der anderen Seite.

Das Ergebnis eines solchen Prozesses wird anhand von in **Fig. 5** illustriert. Dargestellt ist ein Schnitt durch einige Windungen eines zylindrischen Verbundkörpers 109, der durch spiralförmiges Aufwickeln einer bandförmigen Kathode 101 und einer bandförmigen Anode 102 gebildet wurde. Innerhalb des Verbundkörpers 109 sind die Kathode 101 und die Anode 102 durch zwei bandförmige Separator- oder Festelektrolytschichten 110 und 111 voneinander getrennt. Sowohl die Kathode 101 als auch die Anode 102 wurden einerVorbehandlunggemäß Fig. 4 unterzogen, im Rahmen dererdie freien Randstreifen 101c und 102c ihrer Stromkollektoren einen V-förmigen Querschnitt erhielten.

Der als zylindrische Wickel ausgebildete Verbundkörper 109 weist eine erste und eine zweite endständige Stirnseite 109a, 109b und einen Wickelmantel auf. Der freie Randstreifen 101c des Kathodenstromkollektors tritt aus der ersten Stirnseite 109a und der freie Randstreifen 102c des Anodenstromkollektors aus der zweiten Stirnseite 109b aus.

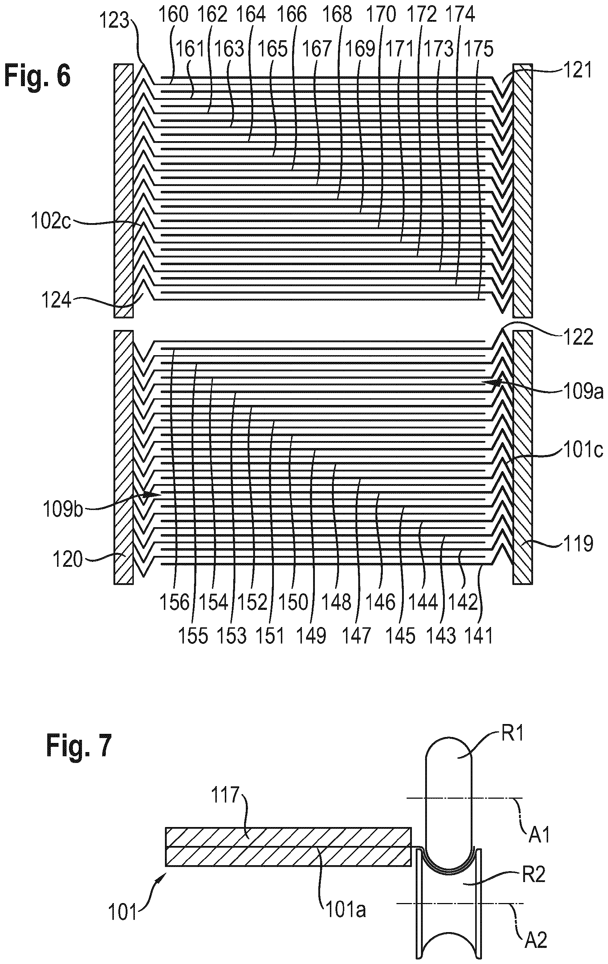

In **Fig. 6** ist ein Schnitt durch eine weitere Ausführungsform eines als Wickel ausgebildeten zylindrischen Verbundkörpers, der durch spiralförmiges Aufwickeln einer bandförmigen Kathode und einer bandförmigen Anode gebildet wurde, dargestellt. Der Wickel weist eine erste Stirnseite 109a und eine zweite Stirnseite 109b auf. Der besseren Übersicht wegen sind hier lediglich die Stromkollektoren 101a und 102a samt ihren jeweiligen freien Randstreifen 101c und 102c dargestellt. Verzichtet wurde auf die Darstellung der Elektrodenmaterialien sowie der zwischen den Elektroden angeordneten Separatoren.

Der aus der Stirnseite 109a austretende freie Randstreifen 101c des Kathodenstromkollektors umfasst in dem Wickel eine radiale Abfolge benachbarter Windungen 141-156. Der aus der Stirnseite 109b austretende freie Randstreifen 102c des Anodenstromkollektors umfasst in dem Wickel eine radiale Abfolge benachbarter Windungen 160-174. Die freien Randstreifen 101c und 102c wurden einer Vorbehandtung gemäß Fig. 4 unterzogen, im Rahmen derer sie jeweils einen V-förmigen Querschnitt erhielten. Im Wickel selbst wurden Anode und Kathode leicht versetzt zueinander angeordnet. Im Bild weist die langgestreckte Erhebung 122 des freien Randstreifens 101c des Kathodenstromkollektors radial nach innen und die langgestreckte Erhebung 123 des freien Randstreifens 102c des Anodenstromkollektors radial nach außen. Es ist natürlich auch denkbar, dass in alternativen Ausführungsformen die langgestreckten Erhebungen 122 und 123 in beiden Fällen nach innen oder in beiden Fällen nach außen weisen, oder dass die langgestreckte Erhebung 123 radial nach innen und die langgestreckte Erhebung 122 radial nach außen weist.

Die Breite der Randstreifen 101c und 102c ist derart bemessen, dass bei benachbarten Windungen die langgestreckte Erhebung einer Windung in die langgestreckte Vertiefung oder Einbuchtung einer radial benachbarten Windung eingeschoben ist. Kathodenseitig ist bei jeder Windung (außer der innersten und der äußersten) die Erhebung 122 in die Vertiefung 121 der nächstinneren Windung eingeschoben. Anodenseitig ist bei jeder Windung (außer der innersten und der äußersten) die Erhebung 123 in die Vertiefung 124 der nächstäußeren Windung eingeschoben.

In der Folge bildet der freie Randstreifen 101c des Kathodenstromkollektors in Blickrichtung senkrecht auf die Stirnseite 109a eine durchgehende Metallschicht aus, die die Stirnseite 109a im vorliegenden Fall vollständig abdeckt. Analoges ist anodenseitig der Fall, hier bildet der freie Randstreifen 102c des Anodenstromkollektors in Blickrichtung senkrecht auf die Stirnseite 109b eine durchgehende Metallschicht aus, die die Stirnseite 109b im vorliegenden Fall vollständig abdeckt.

Die Stirnseiten 109a und 109b des Wickels sind von den Kontaktblechen 119 und 120 abgedeckt. Das Kontaktblech 119 steht in unmittelbarem Kontakt mit dem Randstreifen 101c, das Kontaktblech 120 steht in unmittelbarem Kontakt mit dem Randstreifen 102c. Beim Aufbringen der Kontaktbleche können die Randstreifen 101c und 102c etwas zusammengepresst werden. Umgekehrt können die Randstreifen 101c und 102c eine Federkraft auf die Kontaktbleche ausüben, welche den Kontakt zu den Blechen verstärkt. Besonders bevorzugt besteht zwischen den Kontaktblechen 119 und 120 und den Randstreifen eine Schweißverbindung.

**Fig. 7** illustriert die Bildung eines Randstreifens mit U-förmigem Querschnitt. Der freie Randstreifen 101c einer Kathode 101, wie sie in Fig. 2 dargestellt ist, wird in Längsrichtung durch einen von zwei Rollen R1 und R2 gebildeten U-förmigen Spalt geführt. Dabei wird der Randstreifen 101c deformiert und erhält den ihn charakterisierenden U-förmigen Querschnitt mit einer langgestreckten Vertiefung oder Einbuchtung 121 auf einer Seite und eine zu der Vertiefung 121 korrespondierende langgestreckte Erhebung 122 auf der anderen Seite.

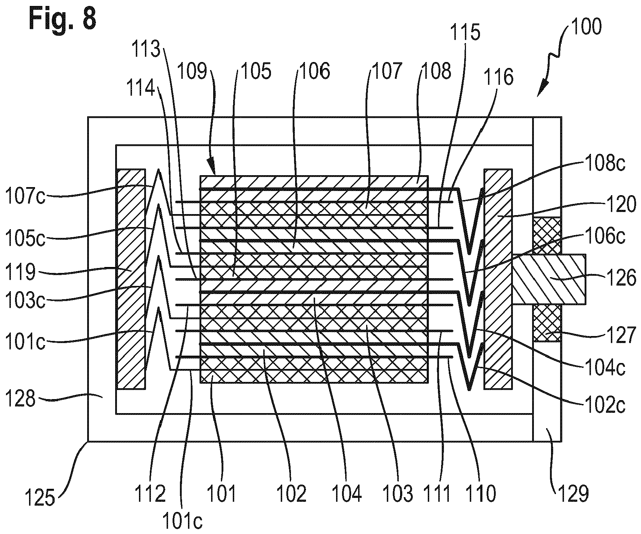

In **Fig. 8** ist ein Energiespeicherelement 100 gemäß der Erfindung dargestellt. Es umfasst den prismatischen Verbundkörper 109 und ein prismatisches Gehäuse 125. Das prismatische Gehäuse 125 setzt sich zusammen aus dem becherförmigen Gehäuseteil 128 und dem Deckelbauteil 129. Durch das Deckelbauteil 129 ist der Kontaktpol 126 geführt, der mit dem Kontaktblech 120 durch Verschweißung verbunden ist. Gegenüber dem Deckelbauteil 129 ist der Kontaktpol 126 mittels des Isolierelements 127 elektrisch isoliert. Das Kontaktblech 119 ist an den Boden des Gehäuseteils 128 geschweißt.

In dem Gehäuseteil befindet sich der Verbundkörper 109, der in Form eines prismatischen Stapels vorliegt. In dem Stapel liegen die positiven Elektroden 101, 103, 105 und 107 sowie die negativen Elektroden 102, 104, 106 und 108 gestapelt vor, jeweils getrennt durch Separatorschichten 110, 111, 112, 113, 114, 115 und 116. Die Elektroden weisen jeweils eine rechteckige Grundform auf.

Die freien Randstreifen 101c, 103c, 105c und 107c der positiven Elektroden und die freien Randstreifen 102c, 104c, 106c und 108c der negativen Elektroden wurden einer Vorbehandlung gemäß Fig. 4 unterzogen, im Rahmen derer sie jeweils einen V-förmigen Querschnitt erhielten. Sie weisen somit jeweils eine Seite mit einer langestreckten Vertiefung und eine weitere Seite mit einer langgestreckten Erhöhung auf.

Die freien Randstreifen 101c, 103c, 105c, 107c treten aus einer Seite des prismatischen Stapels aus und stehen alle mit dem Kontaktblech 119 in unmittelbarem Kontakt. Sie sind alle parallel zueinander angeordnet, die langgestreckten Erhebungen der Randstreifen weisen alle in die gleiche Richtung. Die freien Randstreifen 102c, 104c, 106c und 108c treten aus der gegenüberliegenden Seite des prismatischen Stapels aus und stehen alle mit dem Kontaktblech 120 in unmittelbarem Kontakt. Auch sie sind alle parallel zueinander angeordnet, ihre langgestreckten Erhebungen weisen ebenfalls alle in die gleiche Richtung.

Die freien Randstreifen 101c, 103c, 105c und 107c sind über ihre langgestreckten Erhebungen bzw. ihre langgestreckten Vertiefungen oder Einbuchtungen miteinander gekoppelt. So ist die langgestreckte Erhöhung des Randstreifens 101c in die langgestreckte Vertiefung oder Einbuchtung des Randstreifens 103c eingeschoben, die die langgestreckte Erhöhung des Randstreifens 103c ist in die langgestreckte Vertiefung oder Einbuchtung des Randstreifens 105c eingeschoben und die die langgestreckte Erhöhung des Randstreifens 105c ist in die langgestreckte Vertiefung oder Einbuchtung des Randstreifens 107c eingeschoben. Anodenseitig bietet sich das gleiche Bild, hier ist die langgestreckte Erhöhung des Randstreifens 108c in die langgestreckte Vertiefung oder Einbuchtung des Randstreifens 106c eingeschoben, die die langgestreckte Erhöhung des Randstreifens 106c ist in die langgestreckte Vertiefung oder Einbuchtung des Randstreifens 104c eingeschoben und die die langgestreckte Erhöhung des Randstreifens 104c ist in die langgestreckte Vertiefung oder Einbuchtung des Randstreifens 102c eingeschoben. Hieraus ergibt sich, dass die freien Randstreifen 101c, 103c, 105c und 107c in Blickrichtung senkrecht auf die Seite des Stapels, aus der sie austreten, eine durchgehende Metallschicht ausbilden, die die Seite nahezu vollständig abdeckt. Anodenseitig bilden die freien Randstreifen 102c, 104c, 106c und 108c in Blickrichtung senkrecht auf die Seite des Stapels, aus der sie austreten, eine durchgehende Metallschicht aus, die diese Seite nahezu vollständig abdeckt.

## Patentansprüche

1. Energiespeicherelement (100) mit den Merkmalen
a. Es umfasst eine Kathode (101) und eine Anode (102), die Teile eines Verbundkörpers (109) sind, in dem sie, getrennt durch eine Separator- oder Festelektrolytschicht (110), in der Sequenz Kathode (101) / Separator- oder Festelektrolytschicht (110) / Anode (102) vorliegen,
b. die Kathode (101) umfasst einen Kathodenstromkollektor (101a) und ein positives Elektrodenmaterial (117),
c. der Kathodenstromkollektor (101a) weist
• einen Hauptbereich (101b), der beidseitig mit einer Schicht aus dem positiven Elektrodenmaterial (117) beladen ist, sowie
• einen freien Randstreifen (101c), der sich entlang eines Rands des Kathodenstromkollektors (101a) erstreckt und der nicht mit dem positiven Elektrodenmaterial (117) beladen ist, auf,
d. die Anode (102) umfasst einen Anodenstromkollektor (102a) und ein negatives Elektrodenmaterial (118),
e. der Anodenstromkollektor (102a) weist
• einen Hauptbereich (102b), der beidseitig mit einer Schicht aus dem negativen Elektrodenmaterial (118) beladen ist, sowie
• einen freien Randstreifen (102c), der sich entlang eines Rands des Anodenstromkollektors (102a) erstreckt und der nicht mit dem negativen Elektrodenmaterial (118) beladen ist, auf,
f. die Kathode (101) und die Anode (102) sind derart ausgebildet und/oder innerhalb des Elektroden-Separator-Verbunds (109) derart zueinander angeordnet, dass der freie Randstreifen (101c) des Kathodenstromkollektors (101a) aus einer Seite (109a) des Verbundkörpers (109) und der freie Randstreifen (102c) des Anodenstromkollektors (102a) aus einer anderen Seite (109b) des Verbundkörpers (109) austritt,
g. das Energiespeicherelement umfasst ein erstes Kontaktblech (119), das mit einem der freien Randstreifen (101c, 102c) in unmittelbarem Kontakt steht, und ein zweites Kontaktblech (120), das mit dem anderen der freien Randstreifen (101c, 102c) in unmittelbarem Kontakt steht, und
h. mindestens einer der mit einem der Kontaktbleche (119, 120) in unmittelbarem Kontakt stehende Randstreifen (101c, 102c) weist in Folge eines Umformvorgangs einen U-förmigen oderV-förmigen Querschnitt und somit auf einer Seite eine langgestreckte Vertiefung oder Einbuchtung (121) und auf der anderen Seite eine zu der Vertiefung (121) korrespondierende langgestreckte Erhebung (122) auf.

2. Energiespeicherelement nach Anspruch 1 mit den folgenden zusätzlichen Merkmalen:
a. Die Elektroden (101, 102) und die Stromkollektoren (101a, 102a) sowie die Schichten aus den Elektrodenmaterialien (117, 118) sind bandförmig ausgebildet,
b. Es umfasst mindestens einen bandförmigen Separator (110, 111) oder mindestens eine bandförmige Festelektrolytschicht (110),
c. der Verbundkörper (109) liegt in Form eines zylindrischen Wickels vor, in dem die Elektroden (101, 102) und der mindestens eine Separator (110, 111) spiralförmig um eine Wickelachse herum aufgewickelt vorliegen, wobei derVerbundkörper (109) eine erste und eine zweite endständige Stirnseite (109a, 109b) und einen Wickelmantel umfasst und der freie Randstreifen (101c) des Kathodenstromkollektors (101a) aus der ersten Stirnseite (109a) und der freie Randstreifen (102c) des Anodenstromkollektors (102a) aus der zweiten Stirnseite (109b) austritt,
d. Es umfasst ein zylindrisches Gehäuse, insbesondere ein zylindrisches Metallgehäuse, umfassend einen umlaufenden Gehäusemantel und an den Stirnseiten einen kreisförmigen Boden und einen Deckel, und
e. In dem Gehäuse ist der als Wickel ausgebildete Verbundkörper (109) axial ausgerichtet, so dass der Wickelmantel an der Innenseite des umlaufenden Gehäusemantels anliegt.

3. Energiespeicherelement nach Anspruch 2 mit mindestens einem derfolgenden zusätzlichen Merkmale:
a. Die bandförmige positive Elektrode (101) und somit auch der aus der ersten Stirnseite (109a) austretende freie Randstreifen (101c) des Kathodenstromkollektors (101a) umfasst in dem Wickel eine radiale Abfolge benachbarter Windungen (160-174).
b. Die langgestreckte Erhebung (122) des freien Randstreifens (101c) des Kathodenstromkollektors (101a) weist radial nach außen oder radial nach innen.
c. Die bandförmige positive Elektrode (101) umfasst mindestens eine Windung, vorzugsweise eine Vielzahl von Windungen (141-156), bei der oder denen die langgestreckte Erhebung (122) des freien Randstreifens (101c) des Kathodenstromkollektors (101a) in die langgestreckte Vertiefung oder Einbuchtung (121) des freien Randstreifens (101c) des Kathodenstromkollektors (101a) einer radial benachbarten Windungeingeschoben ist.
d. Der freie Randstreifen (101c) des Kathodenstromkollektors (101a) bildet in Blickrichtung senkrecht auf die erste Stirnseite (109a) eine durchgehende Metallschicht aus, die mindestens 80% der Stirnseite (109a) abdeckt.

4. Energiespeicherelement nach Anspruch 2 oder nach Anspruch 3 mit mindestens einem der folgenden zusätzlichen Merkmale:
a. Die bandförmige negative Elektrode (102) und somit auch der aus der zweiten Stirnseite (109b) austretende freie Randstreifen (102c) des Anodenstromkollektors (102) umfasst in dem Wickel eine radiale Abfolge benachbarter Windungen (141-156).
b. Die langgestreckte Erhebung (123) des freien Randstreifens (102c) des Anodenstromkollektors (102) weist radial nach außen oder radial nach innen.
c. Die bandförmige negative Elektrode (102) umfasst mindestens eine Windung, vorzugsweise eine Vielzahl von Windungen (160-175), bei der oder denen die langgestreckte Erhebung (123) des freien Randstreifens (102c) des Anodenstromkollektors (102a) in die langgestreckte Vertiefung oder Einbuchtung (124) des freien Randstreifens (102c) des Anodenstromkollektors (102a) einer radial benachbarten Windung eingeschoben ist.
d. Derfreie Randstreifen (102c) desAnodenstromkollektors (102a) bildet in Blickrichtung senkrecht auf die zweite Stirnseite (109b) eine durchgehende Metallschicht aus, die mindestens 80 % der Stirnseite (109b) abdeckt.

5. Energiespeicherelement nach Anspruch 1 mit den folgenden zusätzlichen Merkmalen:
a. Der Verbundkörper (109) liegt in Form eines prismatischen Stapels vor, in dem die Kathode (101) und die Anode (102) gemeinsam mit weiteren Kathoden (103, 105, 107) und Anoden (104, 106, 108) gestapelt vorliegen.
b. Die Elektroden (101, 102, 103, 104, 105, 106, 107 und 108) und die Stromkollektoren (101a, 102a, 103a, 104a, 105a, 106a, 107a und 108a) sowie die Schichten aus den Elektrodenmaterialien sind polygonal, insbesondere rechteckig, ausgebildet.
c. Es umfasst mindestens einen bandförmigen oder polygonalen, insbesondere rechteckigen, Separator (110, 111, 112, 113, 114, 115, 116) oder mindestens einen bandförmigen oder polygonalen, insbesondere rechteckigen, Festelektrolyten,
d. Der Stapel ist von einem prismatischen Gehäuse (125) umschlossen.

6. Energiespeicherelement nach Anspruch 5 mit mindestens einem der folgenden zusätzlichen Merkmale:
a. Jede der Kathoden (101, 103, 105, 107) des Stapels ist durch den Randstreifen (101c, 103c, 105c, 107c) mit dem U- oder V-förmigen Querschnitt gekennzeichnet.
b. Jede der Anoden (102, 104, 106, 108) des Stapels ist durch den Randstreifen (102c, 104c, 106c, 108c) mit dem U- oder V-förmigen Querschnitt gekennzeichnet.
c. Die freien Randstreifen (101c, 103c, 105c, 107c) der Kathodenstromkollektoren der Kathoden des Stapels treten aus einer Seite des Stapels aus und stehen mit dem ersten Kontaktblech (119) in unmittelbarem Kontakt.
d. Die freien Randstreifen (102c, 104c, 106c, 108c) der Anodenstromkollektoren der Anoden des Stapels treten aus einer anderen Seite des Stapels aus und stehen mit dem zweiten Kontaktblech (120) in unmittelbarem Kontakt.

7. Energiespeicherelement nach Anspruch 5 oder nach Anspruch 6 mit mindestens einem der folgenden zusätzlichen Merkmale:
a. Die freien Randstreifen (101c, 103c, 105c, 107c) der Kathodenstromkollektoren sind parallel zueinander angeordnet.
b. Die langgestreckten Erhebungen der freien Randstreifen (101c, 103c, 105c, 107c) benachbarter Kathodenstromkollektoren weisen in die gleiche Richtung.
c. Benachbarte Randstreifen der freien Randstreifen (101c, 103c, 105c, 107c) der Kathodenstromkollektoren sind miteinander gekoppelt, indem ihre langgestreckten Erhebungen in die langgestreckten Vertiefungen oder Einbuchtungen derfreien Randstreifen der benachbarten Kathodenstromkollektoren eingeschoben sind.
d. Die freien Randstreifen (101c, 103c, 105c, 107c) der Kathodenstromkollektoren bilden in Blickrichtung senkrecht auf die Seite des Stapels, aus der sie austreten, eine durchgehende Metallschicht aus, die mindestens 80 % der Seite vollständig abdeckt.

8. Energiespeicherelement nach einem der Ansprüche 5 bis 7 mit mindestens einem der folgenden zusätzlichen Merkmale:
a. Die freien Randstreifen (102c, 104c, 106c, 108c) der Anodenstromkollektoren sind parallel zueinander angeordnet.
b. Die langgestreckten Erhebungen derfreien Randstreifen (102c, 104c, 106c, 108c) benachbarter Anodenstromkollektoren weisen in die gleiche Richtung.
c. Benachbarte Randstreifen der freien Randstreifen (102c, 104c, 106c, 108c) der Anodenstromkollektoren sind miteinander gekoppelt, indem ihre langgestreckten Erhebungen in die langgestreckten Vertiefungen oder Einbuchtungen der freien Randstreifen der benachbarten Anodenstromkollektoren eingeschoben sind.
d. Die freien Randstreifen (102c, 104c, 106c, 108c) der Anodenstromkollektoren bilden in Blickrichtung senkrecht auf die Seite des Stapels, aus der sie austreten, eine durchgehende Metallschicht aus, die mindestens 80% der Seite vollständig abdeckt.

9. Energiespeicherelement nach Anspruch 1 mit den folgenden zusätzlichen Merkmalen:
a. Das erste Kontaktblech (119) ist mit dem freien Randstreifen (101c) des Kathodenstromkollektors (101a) durch Verschweißung verbunden und/oder das zweite Kontaktblech (120) ist mit dem freien Randstreifen (102c) des Anodenstromkollektors (102a) durch Verschweißung verbunden.
b. Das erste Kontaktblech (119) ist mit dem freien Randstreifen (101c) des Kathodenstromkollektors (101a) mechanisch verbunden und/oder das zweite Kontaktblech (120) ist mit dem freien Randstreifen (102c) des Anodenstromkollektors mechanisch verbunden.

10. Verfahren zur Herstellung eines Energiespeicherelement (100) mit den Merkmalen
a. Es umfasst eine Kathode (101) und eine Anode (102), die Teile eines Verbundkörpers (109) sind, in dem sie, getrennt durch eine Separator- oder Festelektrolytschicht (110), in der Sequenz Kathode (101) / Separator- oder Festelektrolytschicht (110) / Anode (102) vorliegen,
b. die Kathode (101) umfasst einen Kathodenstromkollektor (101a) und ein positives Elektrodenmaterial (117),
c. der Kathodenstromkollektor (101a) weist
• einen Hauptbereich (101b), der beidseitig mit einer Schicht aus dem positiven Elektrodenmaterial (117) beladen ist, sowie
• einen freien Randstreifen (101c), der sich entlang eines Rands des Kathodenstromkollektors (101a) erstreckt und der nicht mit dem positiven Elektrodenmaterial (117) beladen ist, auf,
d. die Anode (102) umfasst einen Anodenstromkollektor (102a) und ein negatives Elektrodenmaterial (118),
e. der Anodenstromkollektor (102a) weist
• einen Hauptbereich (102b), der beidseitig mit einer Schicht aus dem negativen Elektrodenmaterial (118) beladen ist, sowie
• einen freien Randstreifen (102c), der sich entlang eines Rands des Anodenstromkollektors (102a) erstreckt und der nicht mit dem negativen Elektrodenmaterial (118) beladen ist, auf,
f. die Kathode (101) und die Anode (102) sind derart ausgebildet und/oder innerhalb des Elektroden-Separator-Verbunds (109) derart zueinander angeordnet, dass der freie Randstreifen (101c) des Kathodenstromkollektors (101a) aus einer Seite (109a) des Verbundkörpers (109) und der freie Randstreifen (102c) des Anodenstromkollektors (102a) aus einer anderen Seite (109b) des Verbundkörpers (109) austritt, und
g. das Energiespeicherelement umfasst ein erstes Kontaktblech (119), das mit einem der freien Randstreifen (101c, 102c) in unmittelbarem Kontakt steht, und ein zweites Kontaktblech (120), das mit dem anderen der freien Randstreifen (101c, 102c) in unmittelbarem Kontakt steht,
wobei das Verfahren den folgenden Schritt umfasst:
h. Vor der Bildung des Verbundkörpers (109) wird mindestens einer Randstreifen (101c, 102c) einem Umformvorgang unterworfen, in Folge dessen er einen U-förmigen oder V-förmigen Querschnitt und somit auf einer Seite eine langgestreckte Vertiefung oder Einbuchtung (121) und auf der anderen Seite eine zu der Vertiefung (121) korrespondierende langgestreckte Erhebung (122) aufweist.

11. Verfahren nach Anspruch 10 mit dem folgenden zusätzlichen Merkmal:
a. Zur Umformung wird der umzuformende Randstreifen durch einen durch Rollen oder Walzen gebildeten V- oder U-förmigen Spalt geführt.

12. Verfahren nach einem der Ansprüche 10 oder 11 mit dem folgenden zusätzlichen Merkmal:
a. Zur Bildung des Verbundkörpers (109) werden bandförmige Elektroden (101, 102) mit bandförmigen Stromkollektoren (101a, 102a) und bandförmigen Schichten aus den Elektrodenmaterialien (117, 118) verwendet,
b. Zur Bildung des Verbundkörpers (109) wird mindestens ein bandförmiger Separator oder mindestens eine bandförmige Festelektrolytschicht (110,111) verwendet,
c. Der Verbundkörper (109) wird in Form eines zylindrischen Wickels gebildet, indem die Elektroden (101,102) und der mindestens eine bandförmige Separator oder die mindestens eine bandförmige Festelektrolytschicht (110, 111) spiralförmig um eine Wickelachse herum aufgewickelt werden,
d. Beim Aufwickeln der Elektroden entsteht eine radiale Abfolge benachbarter Windungen, und
e. Beim Aufwickeln der Elektroden wird die langgestreckte Erhebung des Randstreifens einer Elektrodenwindung in die langgestreckte Vertiefung oder Einbuchtung einer benachbarten Windung eingeschoben.

13. Verfahren nach einem der Ansprüche 10 oder 11 mit dem folgenden zusätzlichen Merkmal:
a. Zur Bildung des Verbundkörpers (109) werden polygonale Elektroden verwendet,
b. Der Verbundkörper (109) wird in Form eines prismatischen Stapels gebildet, in dem die Kathode (101) und die Anode (102) gemeinsam mit weiteren Kathoden (103, 105, 107) und Anoden (104, 106, 108) gestapelt vorliegen,
c. Jede der Kathoden (101, 103, 105, 107) des Stapels ist durch den Randstreifen (101c, 103c, 105c, 107c) mit dem U- oder V-förmigen Querschnitt gekennzeichnet.
d. Jede der Anoden (102, 104, 106, 108) des Stapels ist durch den Randstreifen (102c, 104c, 106c, 108c) mit dem U- oder V-förmigen Querschnitt gekennzeichnet.
e. Bei der Bildung des Stapels werden die freien Randstreifen (101c, 103c, 105c, 107c) der Kathodenstromkollektoren mit den freien Randstreifen benachbarter Kathodenstromkollektoren gekoppelt, indem ihre langgestreckten Erhebungen in die langgestreckten Vertiefungen oder Einbuchtungen derfreien Randstreifen der benachbarten Kathodenstromkollektoren eingeschoben werden.
f. Bei der Bildung des Stapels werden die freien Randstreifen (102c, 104c, 106c, 108c) der Anodenstromkollektoren mit den freien Randstreifen benachbarter Kathodenstromkollektoren gekoppelt, indem ihre langgestreckten Erhebungen in die langgestreckten Vertiefungen oder Einbuchtungen der freien Randstreifen der benachbarten Kathodenstromkollektoren eingeschoben werden.
